# EUROPEAN PATENT APPLICATION

(11) **EP 0 570 858 A1**
(43) Date of publication of application: **24.11.1993**
(21) Application number: 93107878.6
(22) Date of filing: 14.05.1993
(51) Int. Cl.: B29B 15/02, B26D 1/03, B26D 5/32

(54) **Device and method for separating a region contaminated with foreign matter from a continuous sheet-like member**

(30) Priority: 16.05.1992 JP 149845/92
(71) Applicant: BRIDGESTONE CORPORATION, Tokyo 104 (JP)
(72) Inventor: Hatakeyama, Akira, Kodaira-shi, Tokyo (JP); Nagata, Iwami, Hanno-shi, Saitama-ken (JP)
(74) Representative: Görg, Klaus, Dipl.-Ing.

(57) **Abstract**

A device for eliminating foreign matter from a sheet-like member including, in the path of a conveyor for carrying a sheet-like member (1, 40), a detector (50) for detecting foreign matter in the sheet-like member and a cutter assembly for cutting a region contaminated with the foreign matter characterized in that the cutter assembly includes a slit cutter (60); a cross cutter (70); and a blade catch member (73) being opposed to the cross cutter (70) with the traveling sheet-like member interposed therebetween, and cooperating with the cross cutter to transversally cut the sheet-like member through a contact relation with the cross cutter (70); the device further comprises a slit cutter moving unit (62); a cross cutter moving unit (72); a blade catch member moving unit (74) for moving the blade catch member (73) depending on a region contaminated with the foreign matter to select one of the blade catch surfaces (200); and a control unit for controlling the slit cutter moving unit (62), the cross cutter moving unit (72), the conveyor device (10, 20, 30) and the blade catch member moving unit (74).

## Description

### Background of the Invention

This invention generally relates to a device and a method for automatically separating a region contaminated with undesirable foreign matter, such as metal, from a sheet-like member made of rubber or plastic or the like. More particularly, the present invention relates to a device and a method for detecting foreign matter in a sheet-like member being transported to automatically separate and remove a region contaminated with the foreign matter therefrom.

A sheet-like member is widely used for manufacturing various products. For example, a rubber sheet is fabricated into rubber products such as a tire, a rubber belt or rubber hoses. Such rubber sheet often includes undesirable foreign matter, e.g., metal particles or wood wastes, which should be eliminated from the sheet-like member before being formed into an end product. Contamination with metal particles is extremely serious from the molding accuracy and durability viewpoints of the rubber products, so that the positive elimination of these particles is required.

In a typical rubber sheet making process, labor intensive process is generally adopted for eliminating foreign matter in the rubber sheet. The rubber sheet is carried along a conveyor that comprises a sensor at the upstream of its transportation path. The sensor senses the foreign matter in the rubber sheet and a workman marks that region with any suitable means. Other workman confirms the contaminated region with a hand sensor to cut the same off by using a knife, following which the contaminant-free rubber sheet is loaded on a pallet. This method requires one or more workmen for the elimination process, who are under restraint around the transportation path for the rubber sheet. In addition, the working atmosphere itself is not so much desirable and an automatic labor-saving device has thus been required.

Japanese Patent Application Publication No. 3-14608 discloses a technique which automatically eliminates the foreign matter in the rubber sheet without help of workmen. In the disclosed method, the rubber sheet is cut along the width (in the transversal direction) to separate the contaminated region therefrom. This results in separation of the rubber sheet into two portions, i.e., a leading portion ahead of the contaminated region and a tailing portion following the same. The separation of the sheet-like member causes, however, low working efficiency at the subsequent process. More particularly, continuous operation is interrupted due to the separation of the rubber sheet into sheets and an additional process is required to feed each sheet to a roller or a calendering machine in the following stations. The number of processes required to engage the rubber sheet will increase with more effort for an increased man-hour loss.

With respect to the above mentioned problems the present invention is directed to provide a device and a method for automatically detecting foreign matter in a sheet material such as rubber sheeting or plastic sheeting during its transportation and separate a region contaminated with the foreign matter from the sheet-like member.

### Summary of the Invention

According to one aspect of the present invention, it is provided a device for eliminating foreign matter from a sheet-like member comprising: a conveyor device for carrying the sheet-like member; a foreign matter detector disposed at the upstream of the conveyor device to detect a region on the sheet-like member contaminated with foreign matter; a slit cutter for cutting the sheet-like member in the longitudinal direction of the sheet; slit cutter moving means for moving the slit cutter between a position away from the sheet-like member and a cutting position where the sheet-like member is to be cut; a cross cutter for cutting the sheet-like member in the transversal direction of the sheet; cross cutter moving means for moving the cross cutter between a position away from the sheet-like member and a cutting position where the sheet-like member is to be cut; a blade catch member opposed to the cross cutter with the traveling sheet-like member interposed therebetween, the blade catch member cooperating with the cross cutter to transversally cut the sheet-like member through a contact relation with the cross cutter, the blade catch member having a plurality of blade catch surfaces; blade catch member moving means for moving the blade catch member depending on a location contaminated with the foreign matter to select one of the blade catch surfaces; and control means for controlling the slit cutter moving means and the conveyor device, when the region contaminated with the foreign matter approaches to the cutting station for the slit cutter to cut the sheet-like member in the longitudinal direction so as to define a longitudinal division including the region of the sheet-like member contaminated with the foreign matter, and for controlling the cross cutter moving means, the blade catch member moving means and the conveyor device, when the region contaminated with the foreign matter approaches to the cutting position for the cross cutter to cut the sheet-like member in the transversal direction so as to define a transversal division including the region of the sheet-like member contaminated with the foreign matter, thereby separating the division including the region contaminated with the foreign matter from the sheet-like member.

In an embodiment of the present invention, the conveyor device may comprise a pulse generator for generating pulses corresponding to a traveling distance of the sheet-like member, and wherein the control means controls, in response to the number of pulses counted after the detection of the foreign matter, the timing for operating the slit cutter moving means, the cross cutter moving means and the blade catch member moving means. The foreign matter detector preferably comprises a plurality of metal sensors arranged along the width of the sheet-like member, each of the sensors senses a different division on the sheet-like member, respectively, the foreign matter detector determines which division includes the region contaminated with the foreign matter, the control means controls the slit cutter moving means, the cross cutter moving means, the conveyor device and the blade catch member moving means to separate the division including the contaminated region from the sheet-like member. The device according to the present invention allows automatic elimination of a region contaminated with foreign matter from a sheet-like member.

In an embodiment of the present invention, the blade catch member for the cross cutter may be a cylindrical member having a rotation axis parallel to a blade of the cross cutter, a peripheral surface of the cylindrical member is partially cutaway to form flat portions on the peripheral surface. Each of the flat portions extends in parallel to the rotation axis. The blade catch surface lies on the peripheral surface of the cylindrical member other than the flat portion formed therein. The cross cutter contacting to the blade catch member cuts the sheet-like member along its width other than a region thereof extending over the flat portion. Preferably, the flat portions are arranged into three different patterns, a first pattern is defined with the flat portion formed only in one end of the cylindrical member along its length, a second pattern is defined with the flat portion formed only in the other end of the cylindrical member along its length, and a third pattern is defined with the flat portions formed in both ends of the cylindrical member along its length. It is possible, by means of axially rotating the cylindrical member depending on a location of the region contaminated with the foreign matter, to select a desired pattern and separate only the region contaminated with the foreign matter from the sheet-like member.

According to further another aspect of the present invention, it is provided a method for eliminating foreign matter by means of detecting foreign matter in a sheet-like member using a detector and following which separating a region contaminated with foreign matter from the sheet-like member while the sheet-like member is transported, characterized in that: dividing the sheet-like member into a plurality of divisions to detect a division including a region contaminated with the foreign matter; longitudinally cutting the sheet-like member depending on the region contaminated with the foreign matter to separate the division along the length thereof; transversally cutting the sheet-like member depending on the region contaminated with the foreign matter to separate the division along the width thereof; and falling the contaminated division away from the sheet-like member.

These and other objects and features of the present invention will become more fully apparent from the following description and appended claims taken in conjunction with the accompanying drawing.

### Brief Description of the Drawing

Fig. 1 is a simplified view for use in describing a principle of the present invention, in which illustrated is a rubber sheet having a region contaminated with foreign matter at around a center thereof;
Fig. 2 is a simplified view for use in describing a principle of the present invention, in which illustrated is a rubber sheet having a region contaminated with foreign matter at one side thereof;
Fig. 3 is a schematical view showing an entire structure of a device according to the present invention for separating a region contaminated with foreign matter from a rubber sheet;
Fig. 4 is a side view of a slit cutter applied to the device illustrated in Fig. 3;
Fig. 5 is a plan view of the slit cutter illustrated in Fig. 4;
Fig. 6 is a side view of a cross cutter and a conveyor for separating a region contaminated with foreign matter;
Fig. 7 is a plan view of a cross cutter illustrated in Fig. 6;
Fig. 8 is a front view showing a blade catch member for a cross cutter and a discharge conveyor;
Fig. 9 is a sectional view of the blade catch member taken on line 9-9 in Fig. 8;

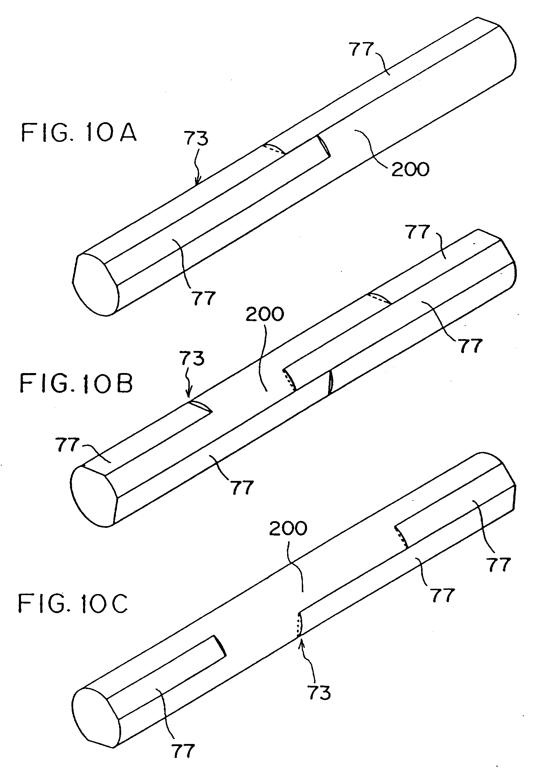

Fig. 10 is a perspective view showing a blade catch member, in which Fig. 10A shows the blade catch member with a first combination of a blade catch surface and a flat portion for cutting a right side of a sheet along its width; Fig. 10B shows the blade catch member with a second combination, appeared by rotating Fig. 10 A at 60 degrees, of a blade catch surface and a flat portion for cutting a left side of a sheet along its width; and Fig. 10C shows the blade catch member with a third combination, appeared by rotating Fig. 10B at 60 degrees, of a blade catch surface and a flat portion for cutting a central portion of a sheet along its width; and
Fig. 11 shows three regions on a rubber sheet to be subject to sensing through respective three sensors.

### Detailed Description of the Preferred Embodiment

A device according to the present invention comprises a detector having at least two sensors provided along the width (in the transversal direction) of a sheet-like member. The sheet-like member is carried on and transported along a conveyor. The sensors sense a region contaminated with foreign matter on the sheet-like member by means of defining divisions and determines which division the contaminated region is in. The determined region is cut off the sheet-like member with a slit cutter, a blade catch member and a cross cutter. The slit cutter cuts the sheet-like member in the longitudinal direction while a combination of the blade catch member and the cross cutter cuts the sheet-like member in the transversal direction. A discharge conveyor is disposed in a passage of the conveyor to automatically discharge the separated portion of the sheet-like member.

A procedure is described in brief for eliminating a region contaminated with the foreign matter from the sheet-like member by means of a device according to the present invention.

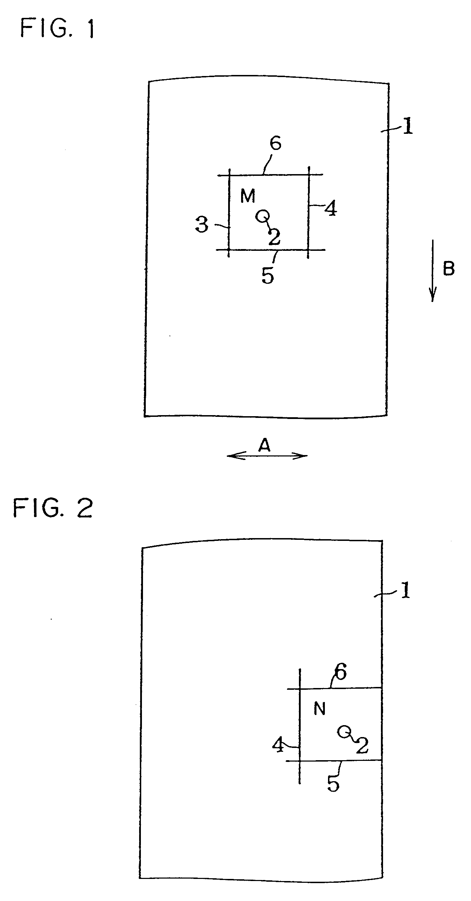

Fig. 1 is a view showing a part of a continuous rubber sheet 1 containing foreign matter 2 at around a center thereof. Two or more sensors are arranged along the width (in the transversal direction) of the sheet 1 as depicted by an arrow A in the figure. The sensors sense the region M contaminated with the foreign matter 2, which the region is to be separated from the sheet 1. In this event, three sensors are arranged over the sheet along the width (in the transversal direction) thereof such that each sensor can sense one of the three divisions along the width (in the transversal direction) of the sheet, i.e., the left-hand region, the central region and the right-hand region, respectively. For this purpose, a slit cutter is disposed over the sheet 1 with a pair of blades being positioned at approximately one-third and two-thirds of the width of the sheet. The slit cutter descends on the sheet 1 to cut the latter in the longitudinal direction along lines 3 and 4 in the figure. The sheet 1 is then subject to be cut along a line 5 in the figure with a combination of a cross cutter and a blade catch member therefor. The resultant sheet 1 is further transported on the conveyor by a predetermined distance in the direction indicated by an arrow B. After being carried for the predetermined distance, the sheet 1 is cut along a line 6 with the cutter and the blade catch combination. Thus the area M of the sheet 1 contaminated with the foreign matter is separated from the sheet 1.

Fig. 2 is a view similar to Fig. 1 except for a foreign matter 2 being at one side of the sheet 1. The sensors sense the foreign matter 2 in the same manner as described above. A region N of the sheet 1 should be cut off and separated from the sheet 1. For this purpose, one of the blades of the slit cutter is used to cut the sheet 1 along the line 4. Subsequently, the cross cutter cuts the sheet in the transversal direction along the lines 5 and 6 in cooperation with the blade catch member, thereby separating the region N from the sheet 1. The separated region is discharged away from the sheet through a discharge conveyor.

An embodiment of the present invention will be described below in detail in conjunction with a device for eliminating a contaminated region from a rubber sheet used for manufacturing a rubber product such as a tire.

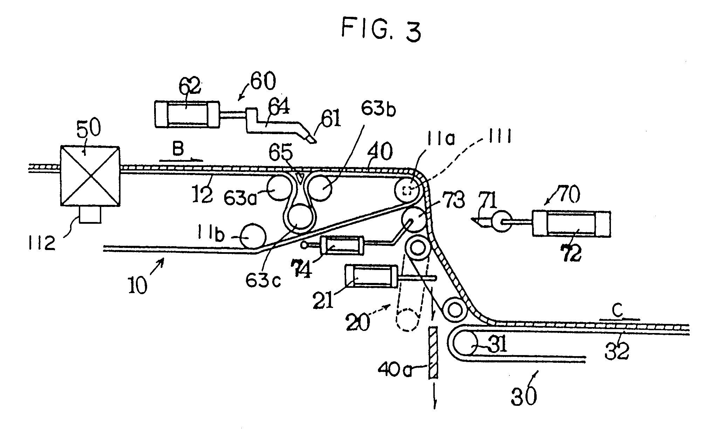

Fig. 3 is a schematical view showing a device according to the present invention for eliminating foreign matter from rubber sheet. The device is mainly composed by conveyors 10, 20 and 30, a foreign matter detector 50, a slit cutter 60, a cross cutter 70 and a blade catch member 73. The conveyors 10 and 30 are arranged in a different level and the conveyor 20 is disposed at a "drop" portion between the conveyors 10 and 30. The conveyor 20 serves as a discharge conveyor for discharging the region of the sheet which is contaminated with the foreign matter and which have been separated from the sheet. The conveyor 10 comprises rollers 11a and 11b. A conveyor belt 12 engages with the rollers to travel in the direction depicted by an arrow B. Similarly the conveyor 30 comprises a conveyor belt 32 traveling in the direction depicted by an arrow C with being engaged with a roller 30a. A rubber sheet 40 is fed from the upstream of the illustrative conveyor 10 or the left-hand of the figure. The conveyors 20 and 30 carries the sheet toward the right-hand (downstream) of the figure. The foreign matter detector 50 is disposed at the upstream of the conveyor 10 to detect foreign matter such as a metal particle. The foreign matter detector 50 comprises three metal sensors (not shown) along the width (in the transversal direction) of the rubber sheet 40. These sensors sense the region contaminated with the foreign matter.

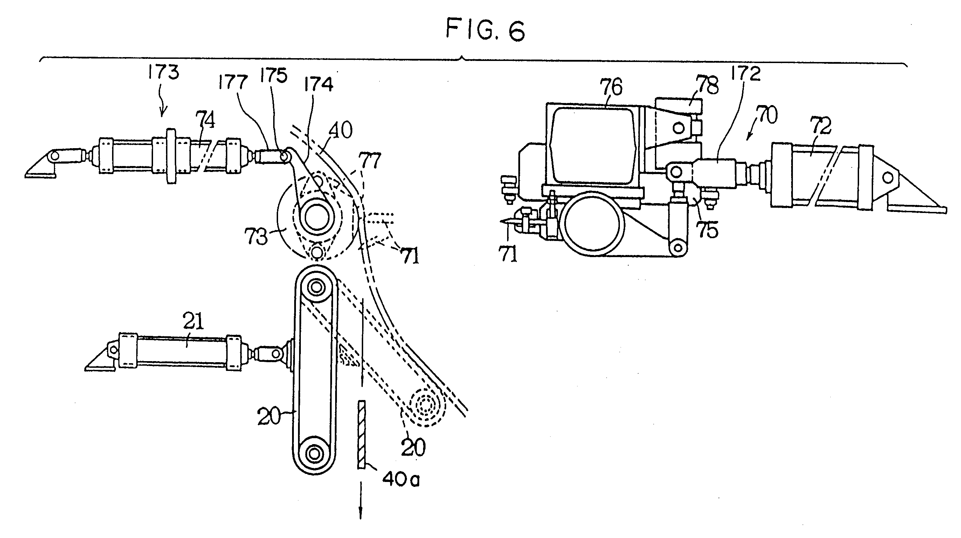

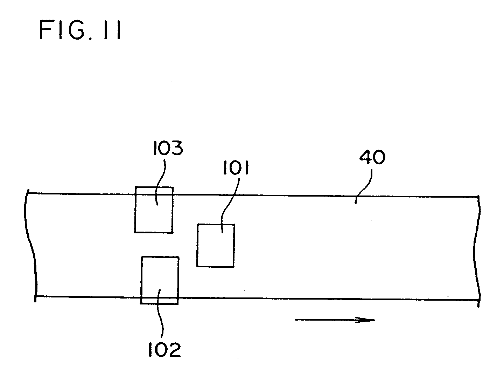

Referring to Fig. 11, divisions 101, 102 and 103 to be subject to sensing through respective sensors are shown on the rubber sheet 40. The metal sensors are capable of sensing the central division 101, the left-half division 102 and the right-half division 103, respectively. On detection of the foreign matter in any one of the three divisions, the metal sensor in question supplies a signal to a blade catch member unit 173 (Fig. 6) in a manner described below to rotate the blade catch member of the blade catch member unit 173 into a predetermined position corresponding to a predetermined blade catch surface.

Turning back to Fig. 3, the roller 11a of the conveyor 10 comprises a pulse generator 111 for generating pulses to a counter (not shown) implemented in a control device 112. The pulse generator 111 generates pulses according to the rotation of the roller. The control device 112 is connected to each of the sensors of the foreign matter detector 50. The sensor sensing the foreign matter supplies a foreign matter detection signal to the counter. In response to the foreign matter detection signal, the counter is initiated to count the number of pulses supplied therewith. The control device 112 supplies a driving signal to the slit cutter 60 when the contaminated region reaches to the cutting station for the slit cutter. Arrival of the region under the cutter can be represented by the number of pulses counted. In the same manner, the control device 112 supplies the driving signal to the cross cutter 70 when the region contaminated with the foreign matter is located in place opposed to the cross cutter 70.

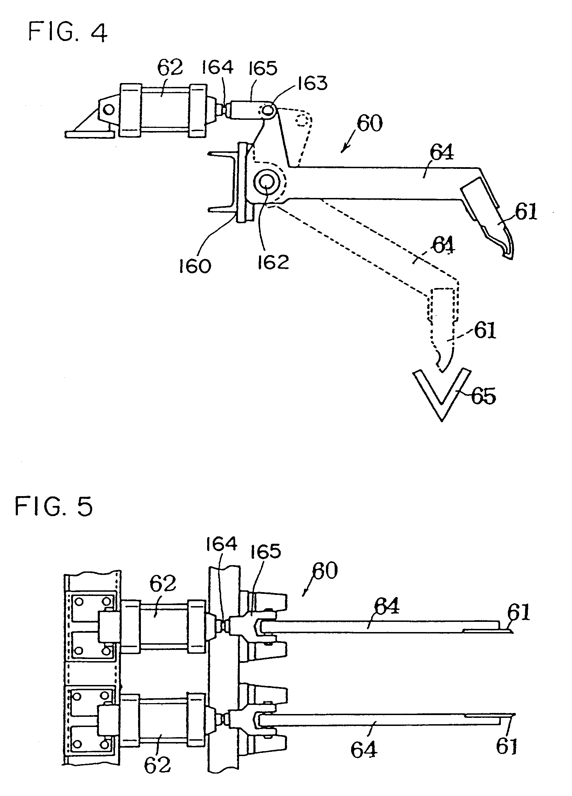

The slit cutter 60 extends over the conveyor 10 to cut the rubber sheet 40 along the length (in the longitudinal direction) thereof. A side view and a plan view of the slit cutter 60 are shown in Figs. 4 and 5, respectively. The cutter 60 is mainly composed by a base portion 160, L-shaped levers 64, cutter blades 61 and air cylinder units 62. A corner of each L-shaped lever 64 is pivotally mounted to the base portion 160 through a pin 162. One end of the L-shaped lever 64 is turned downward and the cutter blade 61 is attached to the tip thereof. The other end of the L-shaped lever 64 is connected to, through a pin 163, a forked lever 165 attached to the end of a cylinder rod 164 of the air cylinder unit 62. When the cylinder rod 164 extends ahead the lever 64 rotates around the shaft 162, thereby the cutter blade 61 moves downward (as indicated by the dotted line in Fig. 4) to cut the rubber sheet 40. The rubber sheet 40 is cut in the longitudinal direction as a result of traveling the same along the conveyor 10 (in the direction depicted by the arrow B in Fig. 3) with the cutter blade 61 kept being descended.

After cutting the sheet by a desired length, the air cylinder unit 62 moves the cutter blade 61 upward. This means completion of the cutting cycle with the slit cutter 60. V-shaped catch blades 65 are disposed in the conveyor in the same level as the belt 12 to receive the corresponding cutter blades 61. As mentioned above, the cutter 60 is operated and stopped in response to a signal supplied from the control device 112.

The belt 12 of the conveyor 10 engages rollers 63a, 63b and 63c as shown in Fig. 3. The cutter blade 61 enters into a belt space between the rollers 63a and 63b. These three rollers are for disposing the catch blades 65 in the belt passage. With the catch blades 65, the cutter blades 61 positively penetrate through the rubber sheet 40 to cut it in the longitudinal direction.

The conveyors 10 and 30 are automatically stopped when the region contaminated with the foreign matter is located in place under the slit cutter 60 along the conveyor 10. The cutter blades 61 then move downward and penetrate through the sheet-like member 40. The conveyors 10 and 30 are operated again with the cutter blades 61 kept contact with the sheet-like member, thereby the rubber sheet 40 is cut through the blades 61 at a predetermined length in the longitudinal direction. After cutting the predetermined length, the cutter blades 61 move upward away from the sheet-like member due to operation of the respective air cylinder 62. The slit cutter 60 thus returns to the stand-by condition.

The distance between two cutter blades, i.e., the cutting width is preferably equal to the width of the sensing region on the sheet for each sensor. In addition, the length being cut through the slit cutter is preferably equal to the cutting width. The control device 112 is thus operable to stop the conveyor 10, before operating the slit cutter 60, in accordance with the predetermined number of pulses corresponding to this cutting length.

The contaminated region of the rubber sheet 40 travels further along the conveyor 10 to the drop portion between the conveyors 10 and 30, i.e., upward of the conveyor 20, where the rubber sheet 40 is subject to the transversal cutting. This cutting is achieved by the cross cutter 70 disposed upstream of the conveyor 30 and downstream of the conveyor 10. The details of the cross cutter 70 will be described below. The cross cutter 70 comprises a cutter blade 71 oriented vertically with respect to the transportation direction of the rubber sheet 40. The cutter blade 71 is operatively connected to air cylinder units 72 through which the blade moves closer to and away from the rubber sheet 40. A blade catch member 73 is disposed under the roller 11a so as to be opposed to the cutter blade 71. The blade catch member 73 serves as an acceptance surface to the cutter blade 71.

The control device 112 stops the conveyors 10 and 30 when the counter counts a predetermined number indicating that the region contaminated with the foreign matter is located in place facing to the cross cutter 70. In this event, the blade catch member 73 is in contact with the back surface of the rubber sheet 40 while the cutter blade 71 advances toward the rubber sheet 40 through the air cylinder units 72. The blade 71 cuts the sheet-like member along the width (in the transversal direction) and then reaches to the blade catch member 73. After that, the cutter blade 71 leaves from the blade catch member 73 and the conveyors 10 and 30 are operated again to transport the rubber sheet 40 with the contaminated region. When the tailing end of the contaminated region reaches to the position opposed to the cutter 70, the conveyors 10 and 30 are stopped in the same manner as described above. The combination of the cutter blade 71 and the blade catch member 73 cuts the rubber sheet 40 along the width (in the transversal direction).

Thus the contaminated region is separated from the rubber sheet 40 with its four sides being cut off through the slit and cross cutters. The separated region falls downward as a sheet piece 40a by means of moving the conveyor 20.

The conveyor 20 is disposed to discharge the contaminated region of the rubber sheet 40 and it serves, at a normal position, as a conveyor contributing to assist transportation of the rubber sheet 40. Once the contaminated region (40a) separated from the sheet-like member 40 through the cutters 60 and 70 is fed to the conveyor 20, an air cylinder 21 retracts the conveyor 20 from its normal position to the position depicted by the dotted line in Fig. 3. As a result, the sheet piece 40a separated from the rubber sheet 40 falls down and is discharged.

While the above mentioned embodiment has thus been described in conjunction with the cutter 60 having two cutter blades 61 arranged along the width (in the transversal direction) of the rubber sheet 40, these blades 61 may be disposed at a fixed position or a screw pin having inversely threaded portions may be provided to make distance between two blades variable.

In addition, it is also possible to position the cutter 70 over the conveyor 10.

Further, the slit cutter 60 and the cross cutter 70 may be inversely positioned to cut the sheet-like member in the reverse order.

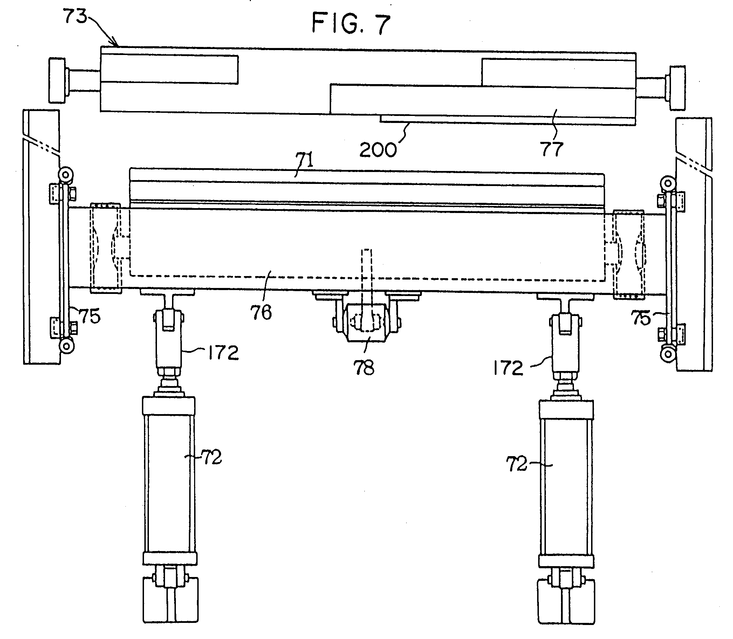

Referring to Figs. 6, 7 and 8, the present embodiment is further described. Fig. 6 is a sectional view of the cross cutter 70, the blade catch member 73 and the foreign matter discharge conveyor 20 while Fig. 7 shows a plan view of the cross cutter 70 and the blade catch member 73. The cutter 70 comprises a header 76 extending in parallel to the width of the rubber sheet 40. The cutter blade 71 is mounted to the lower end of the header 76 along its length. The other end of the header 76 opposing to the cutter blade 71 is connected to one end of rods 172 of a pair of air cylinders 72. Sliders 75 are disposed at both sides of the header 76 with respect to its length to move the cutter 70 in the direction closer to and away from the rubber sheet 40. The sides of the header 76 slidably engage with and move along the respective slider 75. In this event, the header 76 slides along the slider 75 in the direction closer to and away from the belt due to expansion and withdrawal of the rods 172 of the cylinder 72.

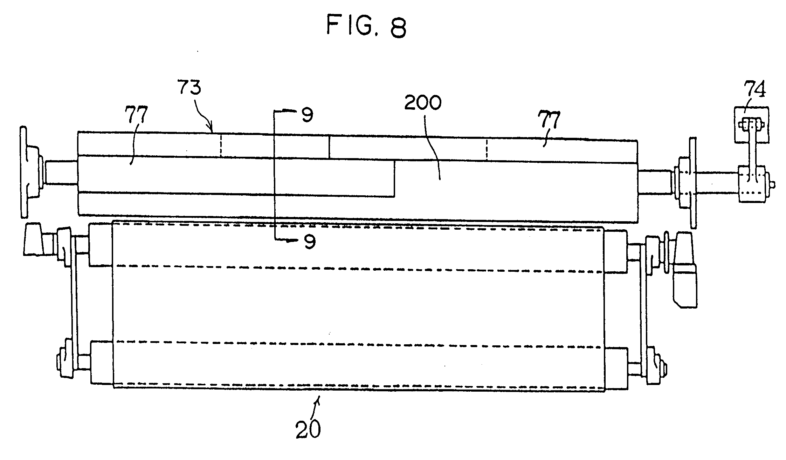

A blade catch member unit 173 is shown in the left-side of Fig. 6. The blade catch member unit 173 is arranged such that it faces the cutter 70 through the rubber sheet 40 interposed therebetween. The plan view of the blade catch member unit 173 and the discharge conveyor 20 is clearly shown in Fig. 8. The blade catch member unit 173 comprises the cylindrical blade catch member 73, the air cylinder 74 and a lever 174 connecting these two. An axis of the cylindrical blade catch member 73 is oriented in parallel to the width of the sheet-like member 40. One end of the lever 174 is pivotally mounted to one end of the blade catch member in such a manner that the lever can rotate around the axis of the blade catch member 73. The other end of the blade catch member 73 is pivotally mounted to a base (not shown) while the other end of the lever 174 is pivotally connected to a rod 177 of the cylinder 173 through a pin 175 (see Fig. 6).

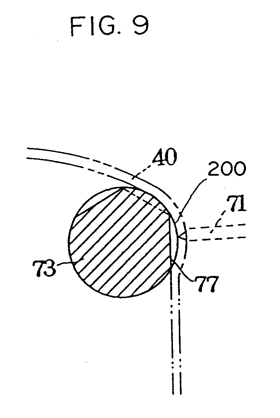

Fig. 9 shows a cross section of the blade catch member 73 taken on line 9-9 in Fig. 8. The blade catch member 73 is also shown in perspective in Fig. 10. The blade catch member 73 has a spherical peripheral surface, a part of which (left-hand in 10A) is cut into a notch in the longitudinal direction to form a flat portion 77. The tip of the blade 71 abuts to the blade catch member 73 when the cutter blade 71 advances toward the blade catch member 73 with the rubber sheet 40 being in contact relation to the peripheral surface of the blade catch member. In this event, where is subject to cutting with the blade 71 is only the region of the sheet-like member directly contacting to the peripheral surface of the blade catch member 73. The region of the sheet-like member 40 extending over the flat portion 77 of the blade catch member 73 is pushed into the portion and is not affected by the blade 71. Accordingly it is possible to remove the contaminated region from the rubber sheet 40 without dividing the sheet into two portions.

The flat portion 77 is preferably formed in the axial direction of the blade catch member 73 such that a predetermined length of the spherical portion (blade catch surface 200) remains on either the right, center and left regions. This results in cutting of only the predetermined length on the rubber sheet 40. In order to cut the contaminated region located at the left side of the sheet-like member 40 with respect to the width thereof, the flat portion is formed as shown in perspective in Fig. 10B. In the figure, the flat portion 77 is formed in the peripheral surface of the blade catch member 73 in the axial direction thereof such that the spherical portion (blade catch surface 200) remains at the left thereof. Similarly, other flat portion 77 is formed at the position shown in perspective in Fig. 10C to cut the contaminated region at the center of the sheet-like member 40. In this event, the flat portion 77 is formed in the peripheral surface of the blade catch member 73 in the axial direction thereof such that the spherical portion (blade catch surface 200) remains at the center thereof. The blade catch member 73 is preferably formed with the flat portions 77 provided on the peripheral surface thereof according to these three patterns as shown in Figs. 10A through 10C. In the present embodiment each pattern is shifted with each other by sixty degrees with respect to the axial rotation angle. The blade catch member 73 having the above mentioned three patterns of flat-spherical combinations is rotated in response to a signal supplied from the sensors in the foreign matter detector 50. The cylinder 74 rotates the blade catch member 73 such that a desired surface thereof comes into facing to the cutter blade 71. Thus only the contaminated region of the sheet-like member is separated therefrom by means of selecting a suitable surface of the blade catch member 73.

The above mentioned description only provides an example of the length and the number of the flat portions formed in the blade catch member 73 as well as the combination pattern thereof and is not limited thereto, which can be selected depending on the necessity. For example, in case where four or more divided regions are directed to detection of foreign matter to separate the contaminated region from the sheet, additional sensor or sensors may be used depending on the number of divisions. In addition, a mechanism may be provided for independently moving the two blades of the slit cutter along the width (in the transversal direction) of the sheet, thereby cutting the sheet at any desirable width. In this event, the position and the number of flat portions formed in the blade catch member are preferably changed depending on the width.

It is apparent that the header 76 comprises a mechanism for mounting the cutter blade 71. Besides, the cutter blade 71 of this embodiment can be rotated downward at about ten degrees by means of an air cylinder 78 disposed on the center of the header 76. The cutter blade 71 is preferably rotated at about five degrees just after cutting the rubber sheet 40 to secure positive cutting.

The conveyor 20 is for use in removing the region 40a separated from the rubber sheet 40 as a result of cutting through the slit and cross cutters. It serves, at a normal position, as a conveyor contributing to assist transportation of the rubber sheet 40. When the cutter 70 is operated, the air cylinder 21 retracts the lower end of the conveyor 20 from its normal position into vertical orientation (depicted by the dotted line in Fig. 3). As a result, the sheet piece 40a separated from the rubber sheet 40 falls down and is discharged.

As mentioned above, in order to eliminate foreign matter in a sheet-like member, the present invention allows automatic separation of the region contaminated with foreign matter without dividing the sheet into two. Accordingly it is possible feed the contaminant-free sheet to subsequent stations, which allows considerable savings in cost and in time.

## Claims

1. A device for eliminating foreign matter from a sheet-like member comprising, in the path of a conveyor device for carrying a sheet-like member (1, 40), a detector (50) for detecting foreign matter in the sheet-like member and a cutter assembly for cutting a region contaminated with the foreign matter characterized in that:
the cutter assembly includes a slit cutter (60) for cutting the sheet-like member (1, 40) in the longitudinal direction of the sheet; a cross cutter (70) for cutting the sheet-like member (1, 40) in the transversal direction of the sheet; and a blade catch member (73) being opposed to said cross cutter (70) with the traveling sheet-like member interposed therebetween, and cooperating with said cross cutter to transversally cut the sheet-like member through a contact relation with said cross cutter (70), said blade catch member (73) having a plurality of blade catch surfaces (200);
said device further comprises slit cutter moving means (62) for moving said slit cutter (60) between a position away from the sheet-like member and a cutting position where the sheet-like member is to be cut;
cross cutter moving means (72) for moving said cross cutter (70) between a position away from the sheet-like member and a cutting position where the sheet-like member is to be cut;
blade catch member moving means (74) for moving said blade catch member (73) depending on a location contaminated with the foreign matter to select one of the blade catch surfaces (200); and
control means for controlling said slit cutter moving means (62) and said conveyor device (10, 20, 30), when the region contaminated with the foreign matter approaches to the cutting position for said slit cutter (60) to cut the sheet-like member in the longitudinal direction so as to define a longitudinal division including the region of the sheet-like member contaminated with the foreign matter, and for controlling said cross cutter moving means (72), said blade catch member moving means (74) and said conveyor device (10, 20, 30), when the region contaminated with the foreign matter approaches to the cutting position for said cross cutter (70) to cut the sheet-like member in the transversal direction so as to define a transversal division including the region of the sheet-like member contaminated with the foreign matter, thereby separating the division (40a) including the region contaminated with the foreign matter from the sheet-like member.

2. A device as claimed in Claim 1, wherein said blade catch member (73) for said cross cutter is a cylindrical member (73) having a rotation axis parallel to a blade of said cross cutter (70), a peripheral surface of said cylindrical member is partially cutaway to form flat portions on said peripheral surface, each of said flat portions extending in parallel to the rotation axis, said cross cutter contacting to said blade catch member (73) cuts the sheet-like member along its width other than a region thereof extending over the flat portion.

3. A device as claimed in Claim 2, wherein said blade catch member moving means (74) is a cylinder device (173) having a lever (174) secured to an end of said cylindrical member and a rod (177) for rotating said cylindrical member (73) by means of squeezing the lever (174), said blade catch member moving means (74) rotates said blade catch member (73).

4. A device as claimed in Claims 2 or 3, wherein said flat portions (77) are arranged into three different patterns, a first pattern is defined with the flat portion (77) formed only in one end of said cylindrical member along its length, a second pattern is defined with the flat portion (77) formed only in the other end of said cylindrical member along its length, and a third pattern is defined with the flat portions (77) formed in both ends of said cylindrical member along its length.

5. A device as claimed in any one of the foregoing Claims, wherein said conveyor (10) comprises a pulse generator (111) for generating pulses corresponding to a traveling distance of the sheet-like member, and wherein said control means (112) controls, in response to the number of pulses counted after the detection of the foreign matter, the timing for operating said slit cutter moving means (62), said cross cutter moving means (72) and said blade catch member moving means (74).

6. A device as claimed in any one of the foregoing Claims, wherein said foreign matter detector (50) comprises a plurality of metal sensors arranged along the width of the sheet-like member (1, 40), each of the sensors senses a different division on the sheet-like member, respectively, said foreign matter detector determines which division includes the region contaminated with the foreign matter, said control means controls said slit cutter moving means (62), said cross cutter moving means (72), said conveyor device (10, 20, 30) and said blade catch member moving means (74) to separate the division including the contaminated region from the sheet-like member.

7. A device as claimed in any one of the foregoing Claims, wherein said slit cutter comprises two cutter blades (61), each of the cutter blades is movable along the width of the sheet-like member (1, 40) and thus capable of cutting the division including the contaminated region at any width.

8. A device as claimed in any one of the foregoing Claims, wherein said slit cutter (60) includes a cutter blade (61) for cutting the sheet-like member (1, 40) and a catch blade (65) for said slit cutter disposed under the sheet-like member at a position corresponding to the cutting position of said slit cutter.

9. A device as claimed in any one of the foregoing Claims, wherein said conveyor device comprises an upstream conveyor (10) located upstream with respect to the traveling direction of the sheet-like member, a middle stream conveyor (20) located middle course with respect to the same and a downstream conveyor (30) located downstream with respect to the same, the upstream conveyor is oriented in substantially horizontal in a level higher than that of the downstream conveyor, the middle stream conveyor is inclined to connect the upstream and the downstream conveyors.

10. A device as claimed in Claim 9, wherein said slit cutter (60) and said cross cutter (70) are located upstream from the middle stream conveyor (20), said device further comprises means (21) for withdrawing the middle stream conveyor (20) from its sheet-carrying position, said control means (112) controls, when the region contaminated with the foreign matter is separated from the sheet-like member, said withdrawing means (21) to withdraw the middle stream conveyor (20) from its sheet-carrying position so that the contaminated region falls away from the sheet-like member.

11. A method for eliminating foreign matter by means of detecting foreign matter in a sheet-like member (1, 40) using a detector (50) and following which separating a region contaminated with foreign matter from the sheet-like member while the sheet-like member is transported, characterized in that:
dividing the sheet-like member into a plurality of divisions (101, 102, 103) to detect a division including a region contaminated with the foreign matter;
longitudinally cutting the sheet-like member depending on the region contaminated with the foreign matter to separate the division along the length thereof;
transversally cutting the sheet-like member depending on the region contaminated with the foreign matter to separate the division along the width thereof; and
falling the contaminated division away from the sheet-like member.
